# EUROPÄISCHE PATENTANMELDUNG

(11) **EP 4 748 473 A1**
(43) Veröffentlichungstag der Anmeldung: **27.05.2026**
(21) Anmeldenummer: 25215076.8
(22) Anmeldetag: 11.11.2025
(51) Int. Cl.: B01D 53/02, B01D 53/04

(54) **CO2-ABTRENNUNGSMODUL FÜR EINE CO2-ABTRENNUNGSVORRICHTUNG**

(30) Priorität: 22.11.2024 DE 102024134388
(71) Anmelder: Robert Bosch GmbH, 70442 Stuttgart (DE)
(72) Erfinder: Kneule, Friedrich, 71277 Rutesheim (DE); Stuke, Bernd, 71229 Leonberg (DE); Bauer, Harald, 71139 Ehningen (DE)

(57) **Zusammenfassung**

Es wird ein CO2-Abtrennungsmodul (18) für eine CO2-Abtrennungsvorrichtung zum Abtrennen von CO2 aus einem zugeführten Gasstrom (14), insbesondere Luftstrom (14) einer Umgebung, vorgestellt, mit einer gestapelten Anordnung aufweisend eine Vielzahl von luftdurchlässigen Plattenschichten (42) und luftdurchlässigen Sorptionsschichten (44), welche entlang einer Stapelrichtung (46) jeweils abwechselnd und angrenzend zueinander angeordnet sind, wobei benachbarte luftdurchlässige Plattenschichten (42) Klemmstellen (48) ausbilden, zwischen denen jeweils eine luftdurchlässige Sorptionsschicht (44) eingeklemmt ist.

## Beschreibung

### Stand der Technik

Die Erfindung betrifft ein CO2-Abtrennungsmodul für eine CO2-Abtrennungsvorrichtung zum Abtrennen von CO2 aus einem zugeführten Gasstrom, insbesondere Luftstrom einer Umgebung, und eine CO2-Abtrennungsvorrichtung mit einem derartigen CO2-Abtrennungsmodul sowie ein Verfahren zu Herstellen eines derartigen CO2-Abtrennungsmoduls.

Um die Erwärmung der Erdatmosphäre zu begrenzen, werden sogenannte DAC-Systeme (Direct Air Capture) eingesetzt, um aus der Luft CO2 (Kohlenstoffdioxid) abzutrennen bzw. zu entfernen.

Da die Bindung von CO2 und ggf. Wasser an ein Adsorbermaterial von Temperatur, Druck, Konzentration, Luftfeuchte etc. abhängt, stellen alle Adsorptions- und Desorptionssysteme zyklisch unterschiedliche Bedingungen ein, um durch die sich ergebende Hysterese CO2 abzuscheiden. Um die Desorptionsbedingungen einzustellen, muss das Adsorbermaterial gegen die Umgebung temporär abgeschlossen werden und befindet sich daher in einer Kammer.

Hierbei durchläuft die Kammer in der Regel zyklisch die folgenden Schritte:
(1) Adsorption der Umgebungsluft bei geöffneter Kammer;
(2) Verschließen der Kammer und Aufheizen des Adsorbermaterials und der metallischen Kammerstruktur;
(3) Desorption des CO2 und des mitgebundenen Wassers durch Zufuhr von Wärme (bspw. in einem Bereich von größer oder gleich 90°C bis. Kleiner oder gleich 120°C, im Mittel folglich ca.105°C) unter Ausschluss von Sauerstoff, um Degradation des Adsorbermaterials zu vermeiden, und bei reduziertem Druck (bspw. in einem Bereich von größer oder gleich 50 mbar bis kleiner oder gleich 400 mbar) und Abpumpen des CO2 und des dampfförmigen Wassers mittels einer Vakuumpumpe;
(4) aktives Kühlen des Adsorbermaterials und der Kammer und optional Trocknen des Adsorbermaterials bis unterhalb einer kritischen Temperatur (bspw. in einem Bereich von größer oder gleich 50°C bis kleiner oder gleich 60°C), unterhalb der ein Umgebungsluftkontakt nicht mehr zu einer erhöhten Degeneration des Adsorbermaterials durch den Luftsauerstoff führt;
(5) Öffnen der Kammer gegen die Umgebung, Abkühlen auf Umgebungstemperatur und damit wiedereinsetzende Adsorption von CO2 und Wasser aus der Umgebungsluft.

Luftfilterbahnen, die im Falle von CO2-Adsorption durch Co-adsorption auch Wasser aus der Atmosphäre binden und bei der Desorption freisetzten, sind hoher Feuchtebelastung mit damit verbundener Materiallängenänderung ausgesetzt. Freitragende Strukturen sind daher nicht dauerhaltbar bzw. werden beim Anströmen gegeneinander gedrückt und können verkleben.

Partikuläres Adsorbermaterial in einzelne Ebenen zu befüllen, diese zu verschließen und dann zu stapeln ist aufwändig und benötigt an gegenüberliegenden Adsorberflächen jeweils eine eigene Struktur.

Die US 2020/0391153 A1 beschreibt eine Gastrennungsvorrichtung mit einer verrippten Struktur, bei der ein durch Sorptionsmaterialien für CO2 befüllbarer Bauraum von Wärmetauscherleitungen und Wärmetauscherlamellen durchzogen ist. Das Befüllen eines Adsorbervolumens erfordert erforder hierbei ein aufwendiges Vorfertigen der Luftkanäle.

Die WO 2014/170184 A1 offenbart eine Gastrennungsvorrichtung mit gestapelten Lagen, welche einen steifen Rahmen aufweisen, auf dem beidseitig flexible Tücher gespannt sind. Im Inneren der Lagen ist partikuläres Sorptionsmittel angeordnet, welches über im Rahmen vorgesehene Löcher eingefüllt werden kann.

### Offenbarung der Erfindung

Gegenstand der vorliegenden Erfindung ist ein CO2-Abtrennungsmodul für eine CO2-Abtrennungsvorrichtung zum Abtrennen von CO2 aus einem zugeführten Gasstrom, insbesondere Luftstrom einer Umgebung, mit einer gestapelten Anordnung aufweisend eine Vielzahl von luftdurchlässigen Plattenschichten und luftdurchlässigen Sorptionsschichten, welche entlang einer Stapelrichtung jeweils abwechselnd und angrenzend zueinander angeordnet sind, wobei benachbarte luftdurchlässige Plattenschichten Klemmstellen ausbilden, zwischen denen jeweils eine luftdurchlässige Sorptionsschicht eingeklemmt ist.

Gegenstand der vorliegenden Erfindung ist ferner eine CO2-Abtrennungsvorrichtung zum Abtrennen von CO2 aus einem zugeführten Gasstrom, insbesondere Luftstrom einer Umgebung, mit zumindest einer Abtrennungskammer und zumindest einem in dieser angeordneten CO2-Abtrennungsmodul gemäß der vorangehend beschriebenen Art.

Gegenstand der vorliegenden Erfindung ist außerdem ein Verfahren zum Herstellen eines CO2-Abtrennungsmoduls für eine CO2-Abtrennungsvorrichtung zum Abtrennen von CO2 aus einem zugeführten Gasstrom, insbesondere Luftstrom einer Umgebung, gemäß der vorangehend beschriebenen Art, wobei eine Vielzahl von luftdurchlässigen Plattenschichten und luftdurchlässigen Sorptionsschichten entlang einer Stapelrichtung jeweils abwechselnd und angrenzend zueinander angeordnet werden, um eine gestapelte Anordnung auszubilden, wobei jeweils eine luftdurchlässige Sorptionsschicht zwischen zwei benachbarte luftdurchlässige Plattenschichten an Klemmstellen eingeklemmt wird.

Für einen CO2-Abtrennungsvorgang bzw. Sorptionsvorgang sind dünne Lagen bzw. Schichten aus einem Sorptionsmittel bzw. Sorptionsmittel vorteilhaft, um Druckverluste zu minimieren. Allerdings sind hierfür flache Haltestrukturen notwendig, in denen das bspw. granulare bzw. partikelförmige, faserförmige oder mattenförmige Sorptionsmittel ortsfest bleibt.

Erfindungsgemäß wird daher eine gestapelte Anordnung aufweisend eine Vielzahl von luftdurchlässigen Plattenschichten und luftdurchlässigen Sorptionsschichten, welche entlang einer Stapelrichtung jeweils abwechselnd und angrenzend zueinander angeordnet sind, wobei benachbarte luftdurchlässige Plattenschichten Klemmstellen ausbilden, zwischen denen jeweils eine luftdurchlässige Sorptionsschicht eingeklemmt ist.

Hierdurch kann ein CO2-Abtrennungsmodul mit integrierten Sorptionslagen bereitgestellt werden, welches schnell, einfach und kostengünstig, bspw. mittels Standardfertigungsverfahren und -materialien herstellbar ist und das mechanischen Belastungen, wie sie vom zyklisieren von bspw. granularen bzw. partikelförmigen, faserförmigen oder mattenförmigen Sorptionsmitteln bekannt ist, standhält, ohne dass gesonderte Abstandsstrukturen benötigt werden.

Die gestapelten Anordnung weist eine Vielzahl von luftdurchlässigen Plattenschichten und luftdurchlässigen Sorptionsschichten auf. Diese sind entlang einer Stapelrichtung jeweils abwechselnd und angrenzend, d.h. in Kontakt zueinander angeordnet bzw. gestapelt. Hierbei bilden benachbarte luftdurchlässige Plattenschichten Klemmstellen aus, zwischen denen immer jeweils eine der luftdurchlässigen Sorptionsschichten eingeklemmt ist. D.h., mit anderen Worten, dass jeweils eine luftdurchlässige Sorptionsschicht mittels der beiden angrenzenden luftdurchlässigen Plattenschichten zwischen diesen eingeklemmt ist und dadurch gehalten wird.

Hierbei sei angemerkt, dass die luftdurchlässigen Plattenschichten verständlicherweise undurchlässig für die Sorptionsschichten bzw. ein Sorptionsmittel des Sorptionsschichten sind, insbesondere wenn dieses granular, partikelförmig oder faserförmig ausgebildet ist.

Es ist vorteilhaft, wenn die luftdurchlässigen Plattenschichten jeweils
- nur eine luftdurchlässige Plattenlage aufweisen oder
- zwei oder mehrere luftdurchlässige Plattenlagen aufweisen, welche angrenzend zueinander angeordnet und insbesondere ferner unterschiedlich ausgebildet sind.

D.h., mit anderen Worten, dass die luftdurchlässigen Plattenschichten einlagig oder auch mehrlagig mit unterschiedlicher Durchlässigkeit ausgebildet sein können, um z.B. feine granulare, partikelförmige oder faserförmige Sorptionsmittel zurückhalten zu können. Die mehreren luftdurchlässigen Plattenlagen können hierbei bspw. miteinander gefügt, geklebt oder verschweißt sein.

Es ist ferner vorteilhaft, wenn die luftdurchlässigen Plattenschichten, insbesondere die luftdurchlässigen Plattenlagen ausgewählt sind aus der Gruppe bestehend aus: perforierte Platte, insbesondere perforierte Lochplatte, Gittermatte, Streckgitter, gewobenes Gitter, Drahtgewebe, Strickgewebe, Schaum, oder Kombinationen daraus. Hierbei handelt sich vorteilhafterweise um Standardmaterialien, welche kostengünstig, leicht beziehbar und einfach verarbeitbar sind.

Es ist außerdem vorteilhaft, wenn die luftdurchlässigen Plattenschichten, insbesondere luftdurchlässigen Plattenlagen ein Metall oder/und Polymer aufweisen oder daraus bestehen. Folglich können die luftdurchlässigen Plattenlagen bspw. ein perforiertes Metallblech, Lochblech, Streckmetallblech, Drahtgitter oder Drahtgewebe umfassen. Alternativ oder zusätzlich können sie bspw. eine perforierte Polymerplatte, ein Polymerstreckgitter oder eine polymere Gittermatte umfassen. Letztere benötigen eine geringe Wärmekapazität und damit reduzierten Heizenergiebedarf bei einem Desorptionsvorgang. Die Herstellung kann dabei aus einer Platte, einer Folie oder im Spritzguss erfolgen.

Des Weiteren ist es vorteilhaft, wenn die luftdurchlässigen Plattenschichten, insbesondere luftdurchlässigen Plattenlagen
- eben ausgebildet sind und/oder
- eine, insbesondere makroskopische 3D-Strukturierung mit Kanälen zur Aufnahme der angrenzenden luftdurchlässigen Sorptionsschicht und/oder zur Führung des zugeführten Gasstroms, insbesondere Luftstroms aufweisen, und insbesondere entlang der Stapelrichtung abwechselnd eben ausgebildet sind und eine, insbesondere makroskopische 3D-Strukturierung aufweisen.

Hierbei ist es insbesondere vorteilhaft, wenn die makroskopische 3D-Strukturierung Erhebungen, insbesondere Wellenberge, und/oder Vertiefungen, insbesondere Wellentäler, umfasst, welche in einer Schichtebene der jeweiligen luftdurchlässigen Plattenschicht, insbesondere in einer Lagenebene der jeweiligen luftdurchlässigen Plattenlage punktuell verteilt sind oder sich linear, zick-zack-förmig oder mäanderförmig erstrecken.

Weiter vorteilhaft ist es hierbei, wenn benachbarte luftdurchlässige Plattenschichten mit der makroskopischen 3D-Strukturierung
- gleichsinnig oder gegensinnig orientiert und/oder
- quer zur Stapelrichtung (46) versetzt zueinander oder um die Stapelrichtung (46) in einem Winkel von größer 0° bis kleiner oder gleich 90° verdreht zueinander
angeordnet sind.

Hierdurch können u.a. Toleranzen ausgeglichen werden.

Ferner ist es vorteilhaft, wenn die luftdurchlässigen Sorptionsschichten jeweils
- nur eine luftdurchlässige Sorptionslage aufweisen oder
- zwei oder mehrere luftdurchlässige Sorptionslagen aufweisen, welche angrenzend zueinander angeordnet und insbesondere ferner unterschiedlich ausgebildet sind.

Außerdem ist es vorteilhaft, wenn die luftdurchlässigen Sorptionsschichten, insbesondere die luftdurchlässigen Sorptionslagen zumindest ein Sorptionsmittel aufweisen, welches granular, partikelförmig, faserförmig, vliesförmig oder mattenförmigen ausgebildet ist.

Das Sorptionsmittel ist hierbei zum Abtrennen von CO2 aus einem zugeführten Gas- bzw. Luftstrom ausgebildet. Das Sorptionsmittel ist fest ausgebildet. Das Sorptionsmittel kann bspw. partikelförmig, faserförmig oder mattenförmig ausgebildet sein. Das Sorptionsmittel kann insbesondere ein festes (entsprechend funktionalisiertes) Sorptionsmittel, bspw. ein Adsorptionsmittel und/oder ein Absorptionsmittel umfassen. Demnach kann der Sorptionsmittel bspw. einen partikelförmig, faserförmigen oder vliesförmigen Feststoff als Trägerstruktur mit einem Grundmaterial aufweisen, welches ausgewählt ist aus Gruppe bestehend aus: Harze, Polymere, Keramiken, Zeolithe, Silicate, metallorganische Verbindungen, organische Materialien wie Cellulose oder Aktivkohle, und Kombinationen daraus. Das Grundmaterial kann wiederum mit Aminen, Kaliumcarbonat oder anderen Komponenten, die ausgebildet sind, CO2 chemisch oder physikalisch zu binden, spezifisch funktionalisiert sein.

Das Sorptionsmittel kann ein granulares Ionentauscherharz umfassen oder als granulares Ionentauscherharz ausgebildet sein. Das Sorptionsmittel kann bspw. granulares Lewatit VP OC 1065 oder Zeolith X13 umfassen oder daraus bestehen.

Demnach kann beim Herstellen des CO2-Abtrennungsmodus bspw. zunächst eine untere 3D-strukturierte luftdurchlässige Plattenlage bereitgestellt werden, deren oberen Kanäle mit granularem Sorptionsmittel, welches die angrenzende luftdurchlässige Sorptionslage ausbildet, befüllt werden. Darauf kann dann optional Deckvlies als weitere luftdurchlässige Sorptionslage gelegt werden, um das granulare Sorptionsmittel besser an Ort und Stelle zu halten. Darauf kann dann die benachbarte 3D-strukturierte luftdurchlässige Plattenlage derart angeordnet werden, dass die dazwischenliegende Sorptionslage bzw. die dazwischenliegenden Sorptionslagen eingeklemmt ist/sind. Hierbei dienen die unteren Kanäle der benachbarten 3D-strukturierten luftdurchlässigen Plattenlage zur Luftführung, während die oberen Kanäle wiederum mit der nächsten luftdurchlässige Sorptionslage befüllt werden können.

Des Weiteren ist es vorteilhaft, wenn die luftdurchlässigen Plattenschichten jeweils einen, insbesondere umlaufenden Rahmen aufweisen, welcher insbesondere Zugangsöffnungen und/oder Temperiermedienzugänge und/oder Temperierelemente aufweist. Hierbei ist es insbesondere vorteilhaft, wenn die luftdurchlässigen Plattenschichten in dem Rahmen eingespritzt sind. Hierbei ist der Rahmen insbesondere als Polymerrahmen ausgebildet.

D.h., mit anderen Worten, dass die Plattenschichten jeweils in einem Polymerrahmen eingespritzt sind, sodass bei granularen oder faserförmigen Sorptionsmitteln diese beim Stapeln nur noch schicht- bzw. lagenweise aufgebracht werden muss. Bei mattenförmigen oder vliesförmigen Sorptionsmitteln können diese mit in den Rahmen bzw. Polymerrahmen eingespritzt werden. Im Gegensatz zu bspw. gestapelten Brennstoffzellenelementen muss hierbei der Randbereich nicht aufwendig abgedichtet werden, da Leckagen kein Sicherheitsrisiko darstellen.

Alternativ könnte auch jeweils ein Zwischenrahmen zwischen den Plattenschichten vorgesehen sein, der den Abstand realisiert und die Abdichtungen. An diesen können dann die Plattenschichten angebracht, insbesondere eingeklebt sein.

Es ist vorteilhaft, wenn das CO2-Abtrennungsmodul ferner zumindest ein Heizelement, insbesondere ein Heizrohr bzw. Heizstab oder eine luftdurchlässige Heizmatte bzw. ein Heizgitter zum Temperieren der Sorptionsschichten aufweist. Hierbei können auch die Plattenschichten bzw. Plattenlagen selbst beheizbar ausgebildet sein.

Das CO2-Abtrennungsmodul ist für die Verwendung in einer CO2-Abtrennungsvorrichtung zum Abtrennen von CO2 aus einem zugeführten Gasstrom, insbesondere Luftstrom einer Umgebung (der CO2-Abtrennungsvorrichtung) ausgebildet bzw. eingerichtet. Der Begriff "Zuführen" bzw. "zugeführt" umfasst im Rahmen der vorliegenden Erfindung in erster Linie ein aktiv durchgeführtes bzw. veranlasstes und damit technisch gesteuertes bzw. geregeltes Zuführen des Gas- bzw. Luftstroms mittels einer Gebläseeinheit bzw. Ventilatoreinheit der CO2-Abtrennungsvorrichtung. Der Begriff "Zuführen" bzw. "zugeführt" kann jedoch auch ein passiv durchgeführtes bzw. veranlasstes Zuführen des Gas- bzw. Luftstroms umfassen, ohne dabei den Rahmen der vorliegenden Erfindung zu verlassen. Folglich kann der Luftstrom auf beliebige, bspw. auf natürliche Art und Weise (als Wind) zugeführt werden.

Die CO2-Abtrennungsvorrichtung weist mindestens ein Abtrennungskammer auf, in der zumindest ein erfindungsgemäßes CO2-Abtrennungsmodul angeordnet ist. Typischerweise werden "dicke" Sorptionsschüttungen von unten nach oben durchströmt, um einer Verfestigung durch die Gewichtskraft entgegenzuwirken. Erfindungsgemäß kann es vorteilhaft sein, das CO2-Abtrennungsmodul von oben nach unten zu durchströmen, um die granularen bzw. faserförmigen Sorptionsmittel gegen die luftdurchlässigen Plattenschichten zu drücken und nicht aufzuwirbeln.

Die CO2-Abtrennungsvorrichtung weist bevorzugt eine Vielzahl von Abtrennungskammern auf, welche benachbart übereinander und/oder nebeneinander angeordnet oder bei getrennter Aufstellung fluidisch miteinander verbunden sein können. Die Abtrennungskammern werden einzeln oder gruppenweise parallel in einem CO2-Freisetzungsmodus und in einem CO2-Abtrennungsmodus betrieben bzw. sind einzeln oder gruppenweise parallel in einem CO2-Freisetzungsmodus und in einem CO2-Abtrennungsmodus betreibbar. Hierbei werden der CO2-Freisetzungsmodus und der CO2-Abtrennungsmodus zyklisch wiederholt durchgeführt. Die grundsätzliche Funktionsweise der CO2-Abtrennungsvorrichtung kann bspw. analog zu der eingangs erwähnten WO 2020/212146 A1 erfolgen.

D.h., mit anderen Worten, dass wenn eine der Abtrennungskammern bzw. Gruppe von Abtrennungskammern im CO2-Abtrennungsmodus betrieben wird, die andere der beiden Abtrennungskammern bzw. Gruppe von Abtrennungskammer im CO2-Freisetzungsmodus betrieben wird bzw. betreibbar ist und umgekehrt. Hierbei kann es jedoch auch Zwischenphasen geben, in denen die Abtrennungskammern im gleichen Modus betrieben werden bzw. betreibbar sind.

Der CO2-Freisetzungsmodus wird bei einem Unterdruck und einer gegenüber der Umgebung erhöhten Temperatur durchgeführt. Demnach wird der CO2-Freisetzungsmodus bevorzugt mittels einer Pumpeinheit bzw. Vakuumeinheit durchgeführt, um in dem Sorptionsmittel gebundenes CO2, welches zuvor aufgrund eines CO2-Abtrennungsvorgangs, insbesondere Sorptionsvorgangs gebunden wurde, wieder freizusetzen. Bei dem CO2 handelt es sich verständlicherweise um temporär gebundenes CO2. Der Begriff "Freisetzen" umfasst im Rahmen der vorliegenden Erfindung jegliche sinnvolle Art der Freisetzung bzw. Austreibung von CO2 (Kohlenstoffdioxid) aus dem Sorptionsmittel, wobei eine Lösung und/oder Freisetzung und/oder Abgabe von CO2-Molekülen aus dem Sorptionsmittel erfolgt. Hierbei wird das CO2 insbesondere unter Energieeinbringung bzw. Wärmeeinbringung in das Sorptionsmittel aus diesem freigesetzt bzw. gelöst.

Der CO2-Freisetzungsmodus ist bevorzugt ein Desorptionsmodus. Demnach kann das Freisetzen des CO2 insbesondere mittels zumindest eines der folgenden Verfahren oder Mischformen daraus erfolgen:
- chemisches Desorptionsverfahren
- physikalisches Desorptionsverfahren

Der CO2-Abtrennungsmodus wird bei einem gegenüber dem CO2-Freisetzungsmodus erhöhten Druck, insbesondere Umgebungsdruck und einer gegenüber dem CO2-Freisetzungsmodus erniedrigter Temperatur, insbesondere Umgebungstemperatur durchgeführt. Der Begriff "Abtrennen" umfasst im Rahmen der vorliegenden Erfindung jegliche sinnvolle Art der Abtrennung bzw. Abscheidung von CO2 (Kohlenstoffdioxid) aus dem Gas- bzw. Luftstrom, wobei eine Bindung und/oder Anhaftung und/oder Einlagerung und/oder Aufnahme von CO2-Molekülen an einem Sorptionsmittel erfolgt.

Der CO2-Abtrennungsmodus ist bevorzugt ein Sorptionsmodus, welcher insbesondere einen Adsorptionsvorgang und/oder einen Absorptionsvorgang umfasst. Demnach kann das Abtrennen des CO2 insbesondere mittels zumindest eines der folgenden Verfahren oder Mischformen daraus erfolgen:
- chemisches Adsorptionsverfahren
- physikalisches Adsorptionsverfahren
- chemisches Absorptionsverfahren
- physikalisches Absorptionsverfahren

Die CO2-Abtrennungsvorrichtung kann eine Ventileinheit mit einer Vielzahl von, insbesondere ansteuerbaren Ventilen aufweisen, um die Abtrennungskammer für den CO2-Freisetzungsmodus zu schließen. Die Ventileinheit kann ein Einlassventil aufweisen, welches in einem Einlasskanal für den zugeführten bzw. angesaugten Gas- bzw. Luftstrom angeordnet und ausgebildet ist, den Einlasskanal zu schließen und die Abtrennungskammer stromaufwärts zu isolieren. Die Ventileinheit kann ferner ein Auslassventil aufweisen, welches in einem Auslasskanal für den CO2-reduzierten Gas- bzw. Luftstrom angeordnet und ausgebildet ist, den Auslasskanal zu schließen und die Abtrennungskammer stromabwärts zu isolieren. Die Ventileinheit kann außerdem ein CO2-Ventil aufweisen, welches in einem CO2-Abfuhrkanal zum Abführen von abgetrenntem CO2 angeordnet und ausgebildet ist, den CO2-Abfuhrkanal zu öffnen, um das abgetrennte/gebundene und wieder freigesetzte CO2 aus der Abtrennungskammer gezielt auszubringen.

Die CO2-Abtrennungsvorrichtung kann ferner zumindest eine der folgenden Einheiten aufweisen:
- Gebläseeinheit, insbesondere mit einer Vielzahl von Ventilatoren zum Zuführen des Gas- bzw. Luftstroms;
- Wasserdampfgenerator zum Bereitstellen von Wasserdampf für den CO2-Freisetzungsmodus bzw. Desorptionsmodus;
- Inertisierungseinheit zum Zuführen eines Inertgasstromes, wie bspw. Stickstoff, sauerstoffreie Luft und/oder Wasserdampf zur Entfernung von Sauerstoff vor dem CO2-Freisetzungsmodus bzw. Desorptionsmodus zum Schutz des CO2-Abrennungsmittels vor chemischer Degradation;
- Heizeinheit zur zusätzlichen Erwärmung des Sorptionsmittels für den CO2-Freisetzungsmodus bzw. Desorptionsmodus;
- Kühleinheit zur zusätzlichen Kühlung des Sorptionsmittels für den CO2-Abtrennungsmodus bzw. Sorptionsmodus;
- Materialfördereinheit zur Fördern des Sorptionsmittels durch die Abtrennungskammer;
- Sensoreinheit für den CO2-Abtrennungs- und CO2-Freisetzungsmodus;
- Steuereinheit zur Steuerung und/oder Regelung des CO2-Abtrennungs- und CO2-Freisetzungsmodus.

Die Steuereinheit kann ausgebildet sein, mittels Funkübertragung wie W-LAN, Bluetooth, Near-Field Communication etc. mit anderen Steuereinheiten und/oder einer zentralen Steuereinheit der CO2-Abtrennungsvorrichtung oder eines übergeordneten Systems verbunden zu werden. Hierbei sei angemerkt, dass der Begriff "steuern" im Rahmen der vorliegenden Anmeldung auch ein Regeln der jeweiligen Vorrichtung und/oder Einheit umfasst.

Die CO2-Abtrennungsvorrichtung ist bevorzugt stationär ausgebildet. Insbesondere kann die CO2-Abtrennungsvorrichtung Teil eines Gebäude-Klimasystems, insbesondere in einem Klimasystem innerhalb eines Gebäudes integriert sein. Hierbei können die Abtrennungskammern der CO2-Abtrennungsvorrichtung in den Luft-Klimatisierungskreis des Gebäudes eingebunden sein.

### Zeichnungen

Die Erfindung wird nachstehend anhand der beigefügten Zeichnungen beispielhaft näher erläutert. Es zeigen:
- Fig. 1: eine prinzipiellen Aufbau einer erfindungsgemäßen CO2-Abtrennungsvorrichtung;
- Fig. 2a, b: schematische Darstellungen eines ersten Ausführungsbeispiels eines erfindungsgemäßen CO2-Abtrennungsmoduls;
- Fig. 3: schematische Draufsicht des CO2-Abtrennungsmoduls aus Fig. 2a, b mit gegensinnig orientierten luftdurchlässigen Plattenschichten;
- Fig. 4a, b: schematische Darstellungen eines weiteren Ausführungsbeispiels eines erfindungsgemäßen CO2-Abtrennungsmoduls; und
- Fig. 5: schematische Seitenansicht des CO2-Abtrennungsmoduls aus Fig. 4a, b mit zueinander versetzten luftdurchlässigen Plattenschichten.

In der nachfolgenden Beschreibung bevorzugter Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung der Elemente verzichtet wird.

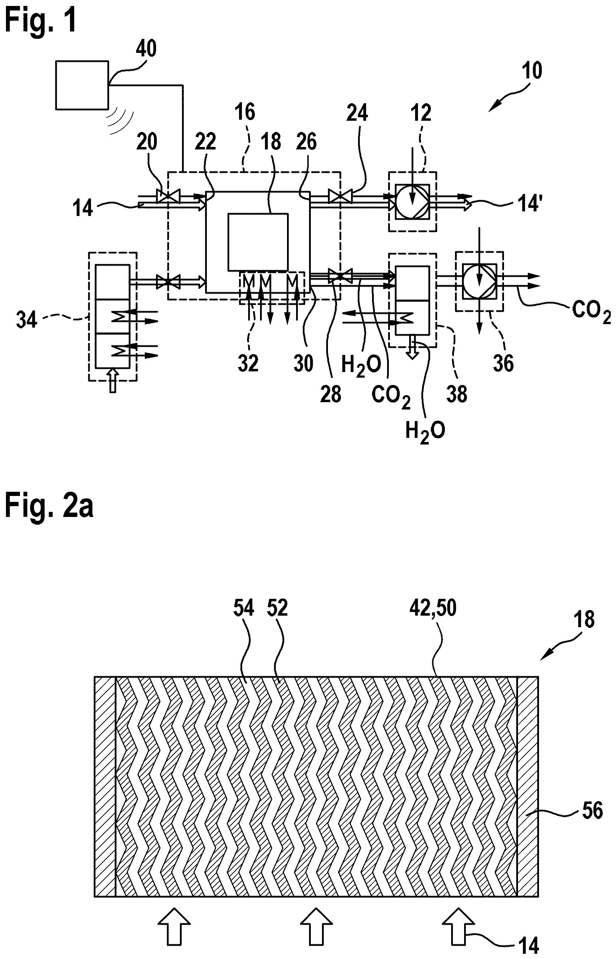

Fig. 1 zeigt eine prinzipiellen Aufbau einer CO2-Abtrennungsvorrichtung, welche in ihrer Gesamtheit mit der Bezugsziffer 10 versehen ist. Die CO2-Abtrennungsvorrichtung 10 ist dazu ausgebildet, CO2 (Kohlenstoffdioxid) aus einem mittels einer Gebläseeinheit 12 zugeführten Luftstrom 14 mittels zyklisch durchführbarer CO2-Abtrennungsmodi bzw. CO2-Sorptionsmodi und CO2-Freisetzungsmodi bzw. CO2-Desorptionsmodi zu trennen.

Hierfür weist die CO2-Abtrennungsvorrichtung 10 eine Abtrennungskammer 16 mit einem erfindungsgemäßen CO2-Abtrennungsmodul 18 auf. Die Abtrennungskammer 16 weist ein Einlassventil 20 an einem Einlasskanal 22 für den angesaugten Luftstrom 14 auf, welches ausgebildet ist, den Einlasskanal 22 zu schließen und die Abtrennungskammer 16 stromaufwärts zu isolieren. Die Abtrennungskammer 16 weist ferner ein Auslassventil 24 an einem Auslasskanal 26 für den CO2-reduzierten Luftstrom 14' auf, welches ausgebildet ist, den Auslasskanal 26 zu schließen und die Abtrennungskammer 16 stromabwärts zu isolieren. Die Abtrennungskammer 16 weist außerdem ein CO2-Ventil 28 auf, welches in einem CO2-Abfuhrkanal 30 angeordnet und ausgebildet ist, den CO2-Abfuhrkanal 30 zu öffnen, um abgetrenntes, d.h. sorbiertes und wieder freigesetztes, d.h. desorbiertes CO2 und ggf. dampfförmiges Wasser aus der Abtrennungskammer 16 auszubringen.

Die CO2-Abtrennungsvorrichtung 10 weist außerdem eine Heiz- und Kühleinheit 32 zur Erwärmung und Kühlen des CO2-Abtrennungsmoduls 18 sowie eine Wasserdampferzeugungseinheit 34 zum Bereitstellen von Wasserdampf für den CO2-Freisetzungsmodus bzw. Desorptionsmodus auf.

Das abgetrennte CO2 und dampfförmige Wasser werden hierbei aus der Abtrennungskammer 16 mittels einer Pumpeinheit 36 bzw. Vakuumpumpe 36 abgepumpt, wobei ein Wasserdampf-Kondensator 38 der Pumpeinheit 36 bzw. Vakuumpumpe 36 vorgeschaltet ist.

Die CO2-Abtrennungsvorrichtung 10 weist außerdem eine Steuereinheit 40 zum Steuern der CO2-Abtrennungsvorrichtung 10 bzw. der CO2-Abtrennungsmodi und CO2-Freisetzungsmodi auf.

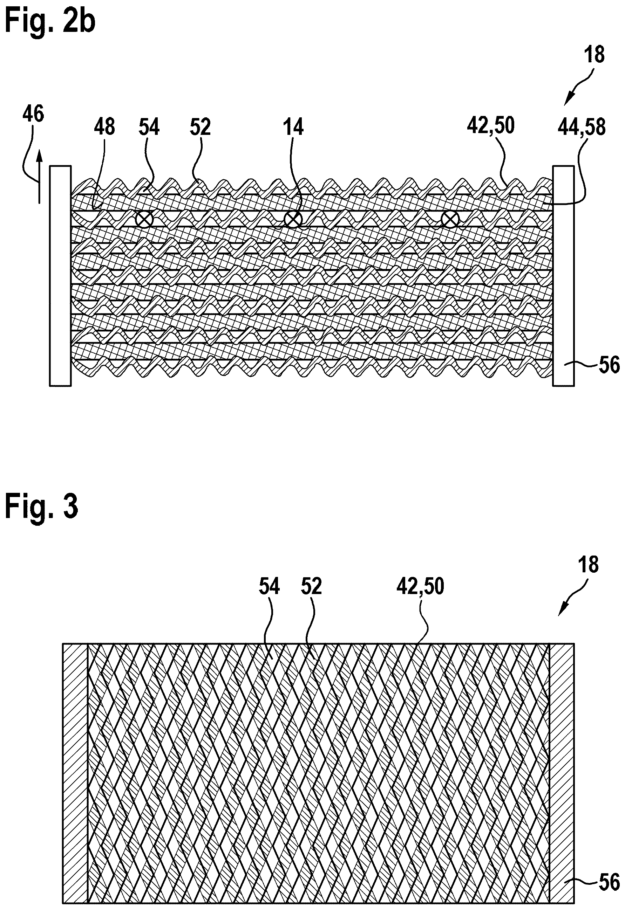

In Fig. 2a, b ist ein erstes Ausführungsbeispiel eines erfindungsgemäßen CO2-Abtrennungsmoduls 18 in einer Draufsicht (Fig. 2a) und einer Seitenansicht (Fig. 2b) gezeigt. Das CO2-Abtrennungsmodul 18 weist eine gestapelten Anordnung mit einer Vielzahl von luftdurchlässigen Plattenschichten 42 und luftdurchlässigen Sorptionsschichten 44 auf, welche entlang einer Stapelrichtung 46 jeweils abwechselnd und angrenzend zueinander angeordnet sind. Hierbei bilden benachbarte luftdurchlässige Plattenschichten 42 Klemmstellen 48 aus, zwischen denen jeweils eine luftdurchlässige Sorptionsschicht 44 eingeklemmt ist.

Die luftdurchlässigen Plattenschichten 42 weist jeweils nur eine luftdurchlässige Plattenlage 50 auf, welche als Streckmetallgitter 50 mit einer zick-zack-förmigen makroskopischen 3D-Strukturierung 52 ausgebildet ist. Die makroskopische 3D-Strukturierung 52 benachbarter luftdurchlässiger Plattenlagen 50 ist hierbei gleichsinnig orientiert und quer zur Stapelrichtung 46 versetzt zueinander angeordnet, wodurch Kanäle 54 zur Führung des zugeführten Luftstroms 14 ausgebildet werden.

Ferner sind die luftdurchlässigen Plattenlagen 50 jeweils in einem Polymerrahmen 56 eingespritzt.

Die luftdurchlässigen Sorptionsschichten 44 weisen jeweils nur eine luftdurchlässige Sorptionslage 58 auf, welche zwischen zwei benachbarten luftdurchlässigen Plattenlagen 50 eingeklemmt sind. Die luftdurchlässige Sorptionslagen 58 weisen hierbei ein mattenförmiges Sorptionsmittel auf.

Fig. 3 zeigt eine schematische Draufsicht des CO2-Abtrennungsmoduls 10 aus Fig. 2a, b mit gegensinnig orientierten luftdurchlässigen Plattenschichten 42 bzw. Plattenlagen 50.

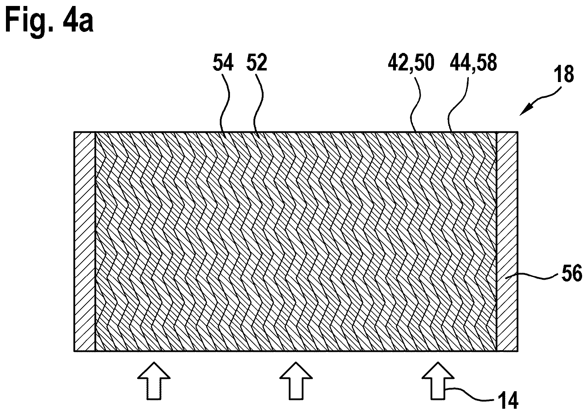

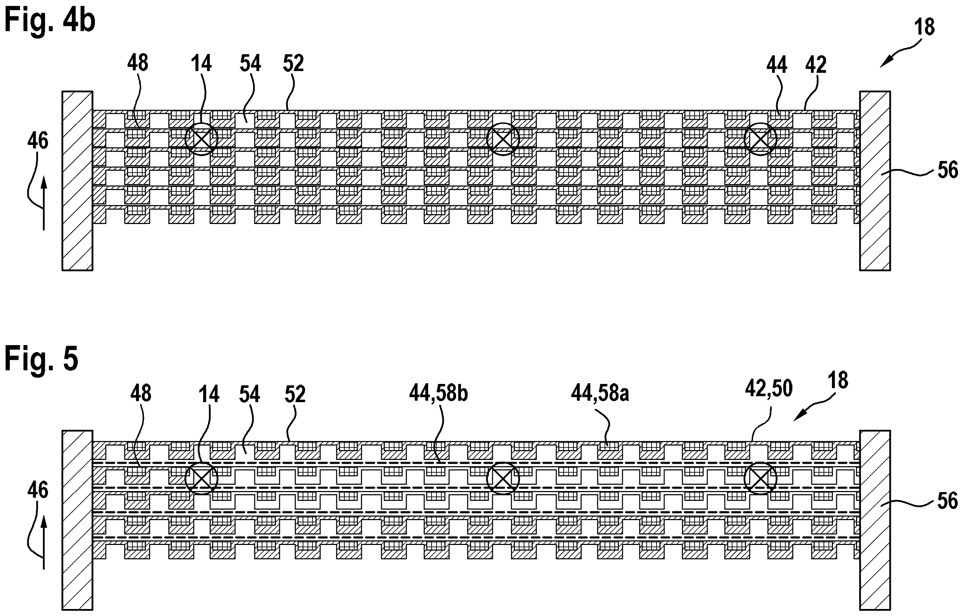

In Fig. 4a, b ist ein weiteres Ausführungsbeispiel eines erfindungsgemäßen CO2-Abtrennungsmoduls 18 in einer Draufsicht (Fig. 4a) und einer Seitenansicht (Fig. 4b) gezeigt. Im Vergleich zum Ausführungsbeispiel aus Fig. 2a, b ist die makroskopischen 3D-Strukturierung 52 benachbarter luftdurchlässiger Plattenlagen 50 nicht versetzt zueinander angeordnet. Ferner weist die luftdurchlässigen Sorptionslagen 58 ein granulares Sorptionsmittel auf, welches in den Kanäle 54 angeordnet ist.

Fig. 5 zeigt eine schematische Seitenansicht des CO2-Abtrennungsmoduls 10 aus Fig. 4a, b mit zueinander versetzten luftdurchlässigen Plattenlagen 50. Ein weiterer wesentlicher Unterschied ist hierbei, dass die Sorptionsschichten 44 jeweils zwei luftdurchlässige Sorptionslagen 58a, b, nämlich eine erste Sorptionslage 58a mit granularem Sorptionsmittel und eine zweite Sorptionslage 58b mit einem vliesförmigen Sorptionsmittel aufweisen, welche angrenzend zueinander angeordnet sind.

## Patentansprüche

1. CO2-Abtrennungsmodul (18) für eine CO2-Abtrennungsvorrichtung (10) zum Abtrennen von CO2 aus einem zugeführten Gasstrom (14), insbesondere Luftstrom (14) einer Umgebung, mit einer gestapelten Anordnung aufweisend eine Vielzahl von luftdurchlässigen Plattenschichten (42) und luftdurchlässigen Sorptionsschichten (44), welche entlang einer Stapelrichtung (46) jeweils abwechselnd und angrenzend zueinander angeordnet sind, wobei benachbarte luftdurchlässige Plattenschichten (42) Klemmstellen (48) ausbilden, zwischen denen jeweils eine luftdurchlässige Sorptionsschicht (44) eingeklemmt ist.

2. CO2-Abtrennungsmodul (18) nach Anspruch 1, **dadurch gekennzeichnet, dass** die luftdurchlässigen Plattenschichten (42) jeweils
- nur eine luftdurchlässige Plattenlage (50) aufweisen oder
- zwei oder mehrere luftdurchlässige Plattenlagen (50) aufweisen, welche angrenzend zueinander angeordnet und insbesondere ferner unterschiedlich ausgebildet sind.

3. CO2-Abtrennungsmodul (18) nach Anspruch 1 oder 2, **dadurch gekennzeichnet, dass** die luftdurchlässigen Plattenschichten (42), insbesondere die luftdurchlässigen Plattenlagen (50), ausgewählt sind aus der Gruppe bestehend aus: perforierte Platte, insbesondere perforierte Lochplatte, Gittermatte, Streckgitter, gewobenes Gitter, Drahtgewebe, Strickgewebe, Schaum, oder Kombinationen daraus.

4. CO2-Abtrennungsmodul (18) nach einem der vorhergehenden Ansprüche, **dadurch gekennzeichnet, dass** die luftdurchlässigen Plattenschichten (42), insbesondere luftdurchlässigen Plattenlagen (50) ein Metall oder/und Polymer aufweisen oder daraus bestehen.

5. CO2-Abtrennungsmodul (18) nach einem der vorhergehenden Ansprüche, **dadurch gekennzeichnet, dass** die luftdurchlässigen Plattenschichten (42), insbesondere luftdurchlässigen Plattenlagen (50)
- eben ausgebildet sind und/oder
- eine, insbesondere makroskopische 3D-Strukturierung (52) mit Kanälen (54) zur Aufnahme der angrenzenden luftdurchlässigen Sorptionsschicht (44) und/oder zur Führung des zugeführten Gasstroms (14), insbesondere Luftstroms (14) aufweisen, und insbesondere entlang der Stapelrichtung (46) abwechselnd eben ausgebildet sind und eine, insbesondere makroskopische 3D-Strukturierung (52), aufweisen.

6. CO2-Abtrennungsmodul (18) nach Anspruch 5, **dadurch gekennzeichnet, dass** die makroskopische 3D-Strukturierung (52) Erhebungen, insbesondere Wellenberge, und/oder Vertiefungen, insbesondere Wellentäler, umfasst, welche in einer Schichtebene der jeweiligen luftdurchlässigen Plattenschicht (42), insbesondere in einer Lagenebene der jeweiligen luftdurchlässigen Plattenlage (50), punktuell verteilt sind oder sich linear, zick-zack-förmig oder mäanderförmig erstrecken.

7. CO2-Abtrennungsmodul (18) nach Anspruch 6, **dadurch gekennzeichnet, dass** benachbarte luftdurchlässige Plattenschichten (42) mit der makroskopischen 3D-Strukturierung (52)
- gleichsinnig oder gegensinnig orientiert und/oder
- quer zur Stapelrichtung (46) versetzt zueinander oder um die Stapelrichtung (46) in einem Winkel von größer 0° bis kleiner oder gleich 90° verdreht zueinander
angeordnet sind.

8. CO2-Abtrennungsmodul (18) nach einem der vorhergehenden Ansprüche, **dadurch gekennzeichnet, dass** die luftdurchlässigen Sorptionsschichten (44) jeweils
- nur eine luftdurchlässige Sorptionslage (58) aufweisen oder
- zwei oder mehrere luftdurchlässige Sorptionslagen (58) aufweisen, welche angrenzend zueinander angeordnet und insbesondere ferner unterschiedlich ausgebildet sind.

9. CO2-Abtrennungsmodul (18) nach einem der vorhergehenden Ansprüche, **dadurch gekennzeichnet, dass** die luftdurchlässigen Sorptionsschichten (44), insbesondere die luftdurchlässigen Sorptionslagen (58), zumindest ein Sorptionsmittel aufweisen, welches granular, partikelförmig, faserförmig, vliesförmig oder mattenförmigen ausgebildet ist.

10. CO2-Abtrennungsmodul (18) nach einem der vorhergehenden Ansprüche, **dadurch gekennzeichnet, dass** die luftdurchlässigen Plattenschichten (42) jeweils einen, insbesondere umlaufenden Rahmen aufweisen, welcher insbesondere Zugangsöffnungen und/oder Temperiermedienzugänge und/oder Temperierelemente aufweist.

11. CO2-Abtrennungsmodul (18) nach Anspruch 10, **dadurch gekennzeichnet, dass** die luftdurchlässigen Plattenschichten (42) in dem Rahmen (56) eingespritzt sind, insbesondere wobei der Rahmen (56) als Polymerrahmen (56) ausgebildet ist.

12. CO2-Abtrennungsvorrichtung (10) zum Abtrennen von CO2 aus einem zugeführten Gasstrom (14), insbesondere Luftstrom (14) einer Umgebung, mit zumindest einer Abtrennungskammer (16) und zumindest einem in dieser angeordneten CO2-Abtrennungsmodul (18) nach einem der vorhergehenden Ansprüche.

13. Verfahren zum Herstellen eines CO2-Abtrennungsmoduls (18) für eine CO2-Abtrennungsvorrichtung (10) zum Abtrennen von CO2 aus einem zugeführten Gasstrom (14), insbesondere Luftstrom (14) einer Umgebung, nach einem der Ansprüche 1 bis 11, **dadurch gekennzeichnet, dass** eine Vielzahl von luftdurchlässigen Plattenschichten (42) und luftdurchlässigen Sorptionsschichten (44) entlang einer Stapelrichtung (46) jeweils abwechselnd und angrenzend zueinander angeordnet werden, um eine gestapelte Anordnung auszubilden, wobei jeweils eine luftdurchlässige Sorptionsschicht (44) zwischen zwei benachbarte luftdurchlässige Plattenschichten (42) an Klemmstellen (48) eingeklemmt wird.

14. Verfahren zum Abtrennen von CO2 aus einem zugeführten Gasstrom (14), insbesondere Luftstrom (14) einer Umgebung mittels eines CO2-Abtrennungsmoduls (18) nach einem der Ansprüche 1 bis 11 oder einer CO2-Abtrennungsvorrichtung (10) nach Anspruch 12.
